(19) Europäisches Patentamt / European Patent Office / Office européen des brevets

(11) EP 3 273 188 B1

(12) **EUROPEAN PATENT SPECIFICATION**

(45) Date of publication and mention of the grant of the patent:
**27.03.2019 Bulletin 2019/13**

(51) Int Cl.:
***F25B 49/02*** *(2006.01)* *F25B 13/00* *(2006.01)*

(21) Application number: **17181095.5**

(22) Date of filing: **13.07.2017**

# (54) CONTROL DEVICE, AIR CONDITIONER, AND CONTROLLING METHOD

STEUERUNGSVORRICHTUNG, KLIMAANLAGE UND STEUERUNGSVERFAHREN

DISPOSITIF DE COMMANDE, DISPOSITIF DE CLIMATISATION ET PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2016 JP 2016142561**

(43) Date of publication of application:
**24.01.2018 Bulletin 2018/04**

(73) Proprietor: **Mitsubishi Heavy Industries Thermal Systems, Ltd.**
**Tokyo 108-8215 (JP)**

(72) Inventors:
- **TAKIGAWA, Masayuki**
  **TOKYO, 108-8215 (JP)**
- **KATO, Takahiro**
  **TOKYO, 108-8215 (JP)**
- **YASUDA, Tatsuhiro**
  **TOKYO, 108-8215 (JP)**
- **SAKAGUCHI, Tomohiro**
  **TOKYO, 108-8215 (JP)**

(74) Representative: **Intès, Didier Gérard André et al**
**Cabinet Beau de Loménie**
**158 rue de l'Université**
**75340 Paris Cedex 07 (FR)**

(56) References cited:
**EP-A1- 2 940 395** **EP-A2- 2 589 896**
**EP-A2- 3 040 651** **US-A1- 2005 103 045**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of the Invention

The present invention relates to a control device, an air conditioner, and a controlling method.

Description of Related Art

When an outdoor heat exchanger of an air conditioner is used as a condenser and an indoor heat exchanger is used as an evaporator under the condition of low outside temperature, the condensing capacity of the condenser becomes excessive due to the influence of the outside air temperature. Therefore, the pressure of the high-pressure refrigerant gas supplied from the condenser (outdoor heat exchanger) decreases, and the pressure of the low-pressure refrigerant gas supplied to the evaporator (indoor heat exchanger) also decreases. Then, in some cases, the temperature of the indoor heat exchanger decreases, and the indoor heat exchanger becomes frosted. At this time, a defrosting control (an anti-frost control) is activated to eliminate a frosting state. When excessive decrease in the temperature of the indoor heat exchanger and the defrosting control are intermittently repeated, the refrigerant gas may not be cooled.

In contrast, conventionally, conventionally, an air conditioner having a mechanism, which prevents a decrease in the pressure of the high-pressure refrigerant gas and the low-pressure refrigerant gas and an excessive decrease in the temperature of the indoor heat exchanger, by limiting the condensing capacity, using only part of a plurality of outdoor heat exchangers provided in the outdoor unit, has been suggested.

Fig. 8 is a diagram showing an example of a circuit configuration diagram of a general air conditioner. A configuration example when using only part of the outdoor heat exchangers in the cooling operation which uses the outdoor heat exchanger as a condenser will be described with reference to Fig. 8. The outdoor unit 1 includes a compressor 10, four-way valves 11a and 11b, outdoor heat exchangers 12a and 12b, and expansion valves 13a and 13b. The compressor 10 compresses the low-pressure refrigerant gas supplied from the low-pressure gas pipe 7 into high-pressure refrigerant gas and discharges the high-pressure refrigerant gas to the high-pressure gas tubes 5a and 5b, and the like. The high-pressure refrigerant gas flows into a compressor side port 111a of the four-way valve 11a and a compressor side port 111b of the four-way valve 11b. In the four-way valve 11a, the compressor side port 111a communicates with an outdoor heat exchanger side port 112a, and a low-pressure gas pipe side port 113a communicates with a bypass pipe side port 114a. Therefore, the high-pressure refrigerant gas is supplied to the outdoor heat exchanger 12a through the outdoor heat exchanger side port 112a. Meanwhile, in the four-way valve 11b, the compressor side port 111b communicates with the bypass pipe side port 114b, and the outdoor heat exchanger side port 112b communicates with the low-pressure gas pipe side port 113b. Therefore, the high-pressure refrigerant gas is not supplied to the outdoor heat exchanger 12b.

The high-pressure refrigerant gas supplied to the outdoor heat exchanger 12a performs heat-exchange with the outside air to dissipate heat, is condensed, and is liquefied. The expansion valve 13a is brought into an open state, and the high-pressure refrigerant liquid is supplied to the indoor unit 2 through the liquid pipe 9. Meanwhile, the expansion valve 13b is brought into a closed state. Therefore, a closed circuit is formed among the branch pipe 15b, the outdoor heat exchanger side port 112b, the low-pressure gas pipe side port 113b, the outdoor heat exchanger 12b, and the expansion valve 13b. The closed circuit is filled with the low-pressure refrigerant gas flowing in from the low-pressure gas pipe 7.

Further, the high-pressure refrigerant liquid supplied to the indoor unit 2 is throttled and expanded by the expansion valve 23, is evaporated in the indoor heat exchanger 22, and draws heat from the indoor air to cool the interior of the room. The low-pressure refrigerant gas evaporated and vaporized flows into the branch controller 21. The branch controller 21 communicates with the indoor heat exchanger side port 211 and the low-pressure gas pipe port 212. Accordingly, the low-pressure refrigerant gas passes through the low-pressure gas pipe 7 and is guided to the outdoor unit 1. The low-pressure refrigerant gas is converted into a high-pressure refrigerant gas again by the compressor 10, and circulates through the aforementioned path.

Further, Patent Document 1 discloses a technique for preventing refrigerant from accumulating in a four-way valve or an outdoor heat exchanger in an air conditioner compatible with simultaneous cooling and heating operation.

[Patent Documents]

[Patent Document 1] Japanese Unexamined Patent Application, First Publication No. 2007-78268
US 2005/0103045 discloses a control device according to the preamble of claims 1 and 2.

SUMMARY OF THE INVENTION

As long as a circuit condenses the refrigerant using only the outdoor heat exchanger 12a, since the condensing capacity does not excessively increase and it is possible to prevent problems such as frost formation in the indoor heat exchanger 22, it is possible to prevent the problem of non-cooling due to intermittent operation of defrosting control. However, under the condition of low outside air temperature, in some cases, the low-pressure refrigerant gas existing in the closed circuit is cooled depending on the outside air temperature in the vicinity of the outdoor heat exchanger 12b, and the pressure in the closed circuit becomes lower than the pressure in the low-pressure gas pipe 7. When such a relationship (pressure of closed circuit < pressure of low-pressure gas pipe 7) occurs between the pressure in the closed circuit and the pressure in the low-pressure gas pipe 7, the low-pressure refrigerant gas flows into the closed circuit from the low-pressure gas pipe 7, and a phenomenon in which the refrigerant accumulates in the outdoor exchanger 12b occurs. Then, the amount of the high-pressure refrigerant liquid supplied to the indoor unit 2 through the outdoor heat exchanger 12a decreases, and deterioration of capacity such as non-cooling due to shortage of the refrigerant occurs.

Therefore, an object of the present invention is to provide a control device, an air conditioner and a method for controlling the air conditioner capable of solving the aforementioned problems.

According to a first aspect of the present invention, there is provided a control device as defined in claim 1, the control device including: a control switching program which, in a refrigerant circuit including a compressor configured to compress a refrigerant, a first outdoor heat exchanger configured to liquefy the refrigerant, a second outdoor heat exchanger configured not to function as either a condenser or an evaporator when operation thereof has been stopped, an expansion valve configured to lower the pressure of the liquefied refrigerant, and an indoor heat exchanger configured to evaporate the low-pressure refrigerant, when a valve opening degree of the expansion valve becomes equal to or larger than a predetermined threshold value, determines that the refrigerant has accumulated in the second outdoor heat exchanger, and switches from a normal operation to a refrigerant recovery operation; and a refrigerant recovery operation control program which, when the control switching program switches to the refrigerant recovery operation, increases the rotational speed of the compressor and controls the pressure on a suction side of the compressor to be lower than the pressure of the second outdoor heat exchanger.

According to a second aspect of the present invention, when a state in which indoor cooling due to the indoor heat exchanger is insufficient continues for a predetermined time or more, instead of determining the valve opening degree of the expansion valve, the control switching program may determine that accumulation of the refrigerant in the second outdoor heat exchanger has occurred.

According to a third aspect of the present invention, the refrigerant recovery operation control program may limit the rotational speed of the compressor so that a defrosting control on the indoor heat exchanger does not operate.

According to a fourth aspect of the present invention, when a state in which the temperature on an inlet side of the indoor heat exchanger is equal to or lower than a predetermined first threshold value continues for a predetermined time or more, the refrigerant recovery operation control program may lower the rotational speed of the compressor.

According to a fifth aspect of the present invention, when the temperature on the inlet side of the indoor heat exchanger is equal to or higher than a predetermined second threshold value after lowering the rotational speed of the compressor, the refrigerant recovery operation control program may increase the rotational speed of the compressor again.

The control device according to a sixth aspect of the present invention further includes an expansion valve control program which calculates a degree of superheating, using a temperature difference between the outlet side and the inlet side of the indoor heat exchanger, and controls the opening degree of the expansion valve so that the degree of superheat becomes a predetermined value, wherein the refrigerant recovery operation control program continues to control the rotational speed of the compressor, until the opening degree of the expansion valve controlled by the expansion valve control program becomes smaller than a predetermined threshold value.

According to a seventh aspect of the present invention, there is provided an air conditioner including an outdoor unit which includes a compressor configured to compress a refrigerant, a plurality of outdoor heat exchangers configured to exchange heat between the refrigerant and outdoor air, and a four-way valve provided to correspond to each of the plurality of outdoor heat exchangers; at least one indoor unit which includes an indoor heat exchanger configured to exchange heat between the refrigerant and indoor air; and the aforementioned control device.

According to an eighth aspect of the present invention, there is provided a method for controlling a refrigerant circuit including a compressor configured to compress a refrigerant, a first outdoor heat exchanger configured to liquefy the refrigerant, a second outdoor heat exchanger during operation stop configured not to function as either a condenser or an evaporator, an expansion valve configured to lower the pressure of the liquefied refrigerant, and an indoor heat exchanger configured to evaporate the low-pressure refrigerant, the method including: determining that the refrigerant has accumulated in the second outdoor heat exchange, when the valve opening degree of the expansion valve becomes equal to or larger than a predetermined threshold value; and performing a control of increasing the rotational speed of the compressor so that the pressure on a suction side of the compressor becomes lower than the pressure of the second outdoor heat exchanger, when it is determined that the refrigerant has accumulated in the second outdoor heat exchanger.

According to the present invention, in an air conditioner including a plurality of outdoor heat exchangers, in an operation state in which only remaining outdoor heat exchangers are operated as condensers, while stopping the operation of some of the outdoor heat exchangers, it is possible to prevent the refrigerant from being accumulated in the outdoor heat exchangers during stoppage thereof.

BRIEF DESCRIPTION OF THE DRAWINGS

Fig. 1 is a first diagram showing an example of a circuit configuration diagram in an embodiment of the present invention.
Fig. 2 is a schematic block diagram of a control device in an embodiment of the present invention.
Fig. 3 is a flowchart of a control device in an embodiment of the present invention.
Fig. 4 is a view showing a transition of a rotational speed of a compressor in a refrigerant recovery operation of an embodiment of the present invention.
Fig. 5 is a second diagram showing an example of a circuit configuration diagram in an embodiment of the present invention.
Fig. 6 is a third diagram showing an example of a circuit configuration diagram in an embodiment of the present invention.
Fig. 7 is a fourth diagram showing an example of a circuit configuration diagram in an embodiment of the present invention.
Fig. 8 is a diagram showing an example of a circuit configuration diagram of a general air conditioner.

DETAILED DESCRIPTION OF THE INVENTION

<First Embodiment>

Hereinafter, an air conditioner according to an embodiment of the present invention will be described with reference to Figs. 1 to 4.

Fig. 1 is a first diagram showing an example of a circuit configuration diagram in an embodiment of the present invention.

Further, the specific configurations of an outdoor unit 1 and an indoor unit 2 of an air conditioner 100 shown in Fig. 1 schematically show the basic configuration of the air conditioner 100, and other constituent elements may be further included. Further, the same reference numerals are given to constituent elements shared by a circuit configuration diagram described in Fig. 8, and a description thereof will be simplified.

As shown in Fig. 1, the air conditioner 100 is configured to include an outdoor unit 1, an indoor unit 2, a high-pressure gas pipe 5, a low-pressure gas pipe 7 and a liquid pipe 9 connecting the outdoor and indoor units, and a control device 30.

First, the outdoor unit 1 will be described. The outdoor unit 1 includes a compressor 10, four-way valves 11a and 11b, outdoor heat exchangers 12a and 12b, and expansion valves 13a and 13b. The compressor 10 compresses the refrigerant gas and supplies the compressed high-pressure refrigerant gas to the refrigerant circuit. The four-way valves 11a and 11b switch the direction of the circulation of the refrigerant between a heating operation time and a cooling operation time. The refrigerant circulates in the direction of the arrow at the time of the cooling operation and circulates in a reverse direction at the time of the heating operation. The outdoor heat exchangers 12a and 12b perform heat exchange between the refrigerant and the outdoor air. The outdoor heat exchangers 12a and 12b function as condensers at the time of the cooling operation to dissipate heat outside of the room, and the outdoor heat exchangers 12a and 12b function as evaporators at the time of the heating operation to absorb heat from outside of the room. The expansion valves 13a and 13b function as valves which lower the pressure of the high-pressure refrigerant liquid at the time of the heating operation, and function as valves which switch between the operation and stopping of the outdoor heat exchangers 12a and 12b as condensers by opening and closing at the time of the cooling operation.

Hereinafter, as a configuration example of the present embodiment, the configuration in the case of stopping the operation of the outdoor heat exchanger 12b at the time of the cooling operation will be mainly described. That is, in the four-way valve 11a, a compressor side port 111a connected to a discharge side of the compressor 10 communicates with an outdoor heat exchanger side port 112a connected to the outdoor heat exchanger 12a. In the four-way valve 11b, a compressor side port 111b connected to the discharge side of the compressor 10 communicates with a bypass pipe side port 114b. Further, the expansion valve 13a is controlled such that it is brought into an open state, and when the refrigerant flows in the direction of the arrow, the outdoor heat exchanger 12a functions as a condenser. Meanwhile, the expansion valve 13b is controlled to be in a closed state, the refrigerant does not flow, and the outdoor heat exchanger 12b stops operation as a condenser and an evaporator.

Next, the indoor unit 2 will be described. The indoor unit 2 includes a branch controller 21, an indoor heat exchanger 22, and an expansion valve 23. The indoor heat exchanger 22 exchanges heat between the refrigerant and the indoor air. At the time of the cooling operation, the indoor heat exchanger 22 functions as an evaporator and evaporates the refrigerant to absorb heat from the room. At the time of the heating operation, the indoor heat exchanger 22 functions as a condenser to dissipate heat to the room. The expansion valve 23 functions as an expansion valve at the time of the cooling operation, and lowers the pressure of the high-pressure refrigerant liquid. The branch controller 21 switches the path of the refrigerant between the high-pressure gas pipe 5 and the low-pressure gas pipe 7. At the time of the cooling operation, the path of the refrigerant is switched to the low-pressure gas pipe 7 so that the indoor heat exchanger side port 211 and the low-pressure gas pipe port 212 communicate with each other. At the time of the heating operation, the path of the refrigerant is switched to the high-pressure gas pipe 5 so that the indoor heat exchanger side port 211 and the high-pressure gas pipe port 213 communicate with each other.

A temperature sensor 221 is provided on the inlet side of the indoor heat exchanger 22, and a pressure sensor 101 is provided on the suction side of the compressor 10. The control device 30 of the air conditioner 100 performs the recovery operation of the refrigerant accumulated in the outdoor heat exchanger 12b, on the basis of the inlet temperature of the indoor heat exchanger 22 measured by the temperature sensor 221, the suction side pressure of the compressor 10 measured by the pressure sensor 101, the valve opening degree of the expansion valve 23 and the like. The control device 30 will be described in detail with reference to Figs. 2 and 3.

Next, the configurations of the branch pipes 15a and 15b and the bypass pipes 16a and 16b connected to the four-way valves 11a and 11b will be described, and a mechanism for preventing refrigerant from accumulating in the outdoor heat exchanger 12b according to the present embodiment will be described. A check valve 17a is provided in the branch pipe 15a which connects the low-pressure gas pipe 7, which connects the indoor heat exchanger 22 with the suction side of the compressor 10, and the low-pressure gas pipe side port 113a of the four-way valve 11a. The check valve 17a causes the refrigerant to flow only from the low-pressure gas pipe side port 113a to the low-pressure gas pipe 7 side. Further, a capillary tube 18a is provided in the bypass pipe 16a that connects the bypass pipe side port 114a of the four-way valve 11a and the branch pipe 15a and bypasses the branch pipe 15a. The capillary tube 18a adjusts the pressure of the refrigerant flowing through the bypass pipe 16a. The bypass pipe 16a is connected to the side of the low-pressure gas pipe 7 at the position of the branch pipe 15a in which the check valve 17a is provided (the downstream side in the flow direction of the refrigerant permitted by the check valve 17a). The same also applies to the branch pipe 15b and the bypass pipe 16b connected to the four-way valve 11b. That is, a capillary tube 18b is provided in the bypass pipe 16b, and a check valve 17b is provided in the branch pipe 15b. One end of the bypass pipe 16b is connected to the branch pipe 15b rather than the low-pressure gas pipe 7, but its connection position is located on the downstream side of the check valve 17b in the branch pipe 15b (the downstream side of the flow direction of the refrigerant permitted by the check valve 17b). Further, the check valve 17b is provided so that the flow of the refrigerant is from the four-way valve 11b side to the low-pressure gas pipe 7 side. The flow direction is a direction in which the refrigerant flows at the time of the heating operation. Further, at the time of the cooling operation, no refrigerant flows through the branch pipe 15b as described with respect to the four-way valve 11a. That is, the necessary flow of the refrigerant is not hindered by the check valves 17a and 17b. Further, the bypass pipes 16a and 16b are provided to prevent high-pressure refrigerant gas or the like from accumulating in the four-way valves 11a and 11b and causing malfunction of the four-way valves 11a and 11b.

Next, a mechanism which prevents the refrigerant from accumulating in the outdoor heat exchanger 12b according to the present embodiment will be described. At the time of the cooling operation, the pressure on the suction side of the compressor 10 is controlled to be a predetermined pressure Pa (e.g., 0.7 MPa). That is, the pressure of the low-pressure gas pipe 7 is controlled to be Pa. Here, when the outside air temperature becomes a low temperature (e.g., -5 °C) and a long period of time elapses, the stopped outdoor heat exchanger 12b is cooled by the outside air, and the pressure of the closed circuit from the check valve 17b to the expansion valve 13b (a circuit that connects the check valve 17b, the low-pressure gas pipe side port 113b, the outdoor heat exchanger side port 112b, the pipe 14b, the outdoor heat exchanger 12b, and the expansion valve 13b) may be lower than the pressure Pa (e.g., 0.6 Mpa). Then, in the case of the conventional circuit configuration exemplified in Fig. 8, since the refrigerant flows into the circuit having a lower pressure, the refrigerant flows from the low-pressure gas pipe 7 to the closed circuit via the branch pipe 15b, and the refrigerant accumulates in the outdoor heat exchanger side port 112b. However, with the circuit configuration of this embodiment shown in Fig. 1, the check valve 17b provided in the branch pipe 15b prevents the flow of the refrigerant from the downstream side to the upstream side of the check valve 17b. Therefore, even when the pressure of the closed circuit is lower than the pressure of the low-pressure gas pipe 7, the refrigerant does not flow into the closed circuit and does not accumulate in the outdoor heat exchanger 12b. A high-pressure (e.g., 3.0 Mpa) refrigerant gas supplied from the high-pressure gas pipe 5b flows into the bypass pipe 16b through the compressor side port 111b and the bypass pipe side port 114b, the pressure of the refrigerant gas is regulated (decompressed) by the capillary tube 18b, and the refrigerant gas flows to the downstream side of the check valve 17b. Then, the pressure on the downstream side of the check valve 17b locally increases, and the local increase in the pressure enhances the function (reverse flow preventing effect) of preventing the reverse flow in the check valve 17b and serves to more reliably prevent inflow of the refrigerant to the downstream side of the check valve 17b. As a result, it is possible to prevent the inflow of the refrigerant from the low-pressure gas pipe 7 to the closed circuit. In this way, according to the present embodiment, it is possible to prevent the refrigerant from flowing into the closed circuit, with the check valve 17b provided in the branch pipe 15b and the bypass pipe 16b connected to the downstream side of the check valve 17b. In order to enhance the reverse flow prevention effect, the bypass pipe 16b is preferably connected to a position as close as possible to the check valve 17b on the downstream side of the check valve 17b. Therefore, it is possible to prevent the cooling capacity of the air conditioner 100 from being lowered, due to insufficient amount of supply of the refrigerant, which is caused by accumulation of the refrigerant in the outdoor heat exchanger 12b.

Next, the control device 30 will be described. The control device 30 controls the operation of recovering the refrigerant accumulated in the outdoor heat exchanger 12b. Even if the check valve 17b is provided, when the cooling operation in the circuit configuration of Fig. 1 is continued for a long period of time under the condition of low outside temperature, the pressure of the closed circuit decreases due to a decrease in the temperature of the outdoor heat exchanger 12b. In such a case, due to minute leakage from the check valve 17b, the refrigerant flows into the closed circuit little by little and may accumulate in the outdoor heat exchanger 12b. In such a situation, the control device 30 increases the rotational speed of the compressor 10, controls the pressure of the low-pressure gas pipe 7 to be lower than the pressure of the outdoor heat exchanger 12b, and recovers the refrigerant accumulated in the outdoor heat exchanger 12b to the circuit through which the refrigerant should inherently circulate.

Fig. 2 is a schematic block diagram of a control device according to an embodiment of the present invention.

The control device 30 is, for example, a computer such as a microcomputer. The control device 30 is connected to the outdoor unit 1 and the indoor unit 2. More specifically, the control device 30 is connected to the pressure sensor 101 and the temperature sensor 221 and obtains measurement values obtained by these sensors. Further, the control device 30 is connected to the compressor 10 and the expansion valve 23, and controls the rotational speed of the compressor 10 and the valve opening degree of the expansion valve 23. Additionally, the control device 30 performs control of communication between the respective ports of the four-way valves 11a and 11b, control of switching between the branch controllers 21, and control of a valve opening degree of the expansion valves 13a and 13b. As shown in Fig. 2, the control device 30 includes a sensor information acquisition program 31, a control switching program 32, a normal operation control program 33, a refrigerant recovery operation control program 34, and a storage program 35.

The sensor information acquisition program 31 acquires the inlet side temperature of the indoor heat exchanger 22 measured by the temperature sensor 221. Further, the sensor information acquisition program 31 acquires the suction side pressure measured by the pressure sensor 101.

The control switching program 32 switches between the normal operation and the refrigerant recovery operation. For example, the control switching program 32 may determine that there is a situation of accumulation of refrigerant based on the valve opening degree of the expansion valve 23, and if the refrigerant is determined to have accumulated in the outdoor heat exchanger 12b, the control switching program 32 performs switching from the normal operation (cooling operation) to the refrigerant recovery operation.

The normal operation control program 33 performs a control at the time of the normal operation. For example, in the case of the cooling operation, the normal operation control program 33 controls the valve opening degree of the expansion valve 23, depending on the required temperature of the indoor unit 2. Further, the normal operation control program 33 controls the rotational speed (frequency) of the compressor 10 so that the suction side pressure of the compressor 10 becomes a predetermined value (e.g., 0.7 Mpa).

The refrigerant recovery operation control program 34 controls the refrigerant recovery operation. Specifically, the refrigerant recovery operation control program 34 increases the rotational speed of the compressor 10 and lowers the pressure of the refrigerant flowing through the low-pressure gas pipe 7. Then, the pressure on the side of the low-pressure gas pipe 7 becomes lower than the pressure of the closed circuit (e.g., 0.5 MPa). Since the flow of the refrigerant from the closed circuit to the branch pipe 15b is not hindered by the check valve 17b, the refrigerant accumulated in the outdoor heat exchanger 12b flows into the low-pressure gas pipe 7 through the branch pipe 15b. As a result, the refrigerant accumulated in the outdoor heat exchanger 12b is recovered to the circuit through which the refrigerant should flow at the time of the cooling operation. Meanwhile, when the temperature of the indoor heat exchanger 22 is excessively lowered by increasing the rotational speed of the compressor 10, frost formation occurs in the indoor heat exchanger 22. When frost formation occurs, the capacity of the air conditioner 100 decreases and the defrosting control operates. Therefore, the refrigerant recovery operation control program 34 controls the rotational speed of the compressor 10 so that the temperature of the indoor heat exchanger 22 does not excessively decrease.

The storage program 35 stores various measurement values acquired by the sensor information acquisition program 31, various parameters used for control or the like by the control switching program 32 or the like.

Next, the refrigerant recovery operation performed by the control device 30 will be described with reference to Figs. 3 and 4.

Fig. 3 is a flowchart of a control device according to an embodiment of the present invention.

Fig. 4 is a diagram showing the transition of the rotational speed of the compressor 10 in the refrigerant recovery operation according to the embodiment of the present invention.

As a premise, the sensor information acquisition program 31 acquires the temperature measured by the temperature sensor 221 at predetermined time intervals, and records the acquired temperature in the storage program 35. Further, the sensor information acquisition program 31 acquires the pressure measured by the pressure sensor 101 at predetermined time intervals, and records the acquired pressure in the storage program 35. Further, the control device 30 manages the rotational speed of the compressor 10 and the valve opening degree of the expansion valve 23, and the respective values during operation are recorded in the storage program 35.

First, the control switching program 32 reads the valve opening degree of the expansion valve 23 from the storage program 35 and compares the valve opening degree with a predetermined threshold value A (step S11). The threshold value A is, for example, 100%. The valve opening degree of 100% is a state in which, because the amount of refrigerant becomes insufficient with respect to the temperature required by the indoor unit 2, the valve opening degree is fully opened to supply the refrigerant to the indoor heat exchanger 22. That is, in this state, there is considered to be insufficient refrigerant flowing through the circuit. When the valve opening degree is 100%, the control switching program 32 determines that there is insufficient refrigerant and switches from the normal operation to the refrigerant recovery operation. That is, when the valve opening degree is equal to or larger than the threshold value A, a refrigerant recovery operation to be described later is performed (step S12 to step S15). Alternatively, the control switching program 32 may perform the refrigerant recovery operation when the state, in which the valve opening degree is equal to or larger than the threshold value A, continues for a predetermined time or more. The state in which there is insufficient refrigerant in the circuit is a state in which the refrigerant has accumulated in the outdoor heat exchanger 12b under the condition of low outside air temperature. At this time, the pressure of the low-pressure gas pipe 7 is considered to be higher than the pressure of the closed circuit.

When the valve opening degree is less than the threshold value A (step S11; No), the control switching program 32 determines to perform the normal operation control. The normal operation control program 33 executes the normal operation control (step S16). In the case of the cooling operation, for example, the normal operation control program 33 controls the rotational speed of the compressor 10 so that the pressure on the suction side of the compressor 10 measured by the pressure sensor 101 becomes a predetermined pressure. Further, the normal operation control program 33 controls the valve opening degree of the expansion valve 23 so that the room has a desired temperature. The normal operation control program 33 controls the valve opening degree of the expansion valve 23, for example, based on the degree of superheat (SH). The degree of superheat SH can be obtained, for example, by the following formula (1).

$$\text{SH} = \text{deviation} - (\text{indoor heat exchanger outlet side temperature} - \text{indoor heat exchanger inlet side temperature}) \ \ldots \ (1)$$

The normal operation control program 33 controls the valve opening degree of the expansion valve 23 so that SH of the formula (1) becomes a predetermined value (e.g., 3 degrees). The normal operation control program 33 reads the outlet side temperature and the inlet side temperature of the indoor heat exchanger 22 from the storage program 35. The normal operation control program 33 controls the valve opening degree so that SH calculated by the formula (1) becomes a predetermined value.

Meanwhile, when the valve opening degree is equal to or larger than the threshold value A (step S11; Yes), the control switching program 32 determines to perform the refrigerant recovery operation. The control switching program 32 instructs the refrigerant recovery operation control program 34 to perform the refrigerant recovery operation. Then, the refrigerant recovery operation control program 34 operates to increase the rotational speed of the compressor 10 by a predetermined rotational speed (step S12). When the rotational speed of the compressor 10 is increased by the refrigerant recovery operation control program 34, the amount of refrigerant discharged from the compressor 10 increases. Then, the temperature of the refrigerant flowing through the low-pressure gas pipe 7 is lowered and the pressure also decreases. Then, the relationship between the pressure of the low-pressure gas pipe 7 and the pressure of the closed circuit is reversed, and the pressure of the low-pressure gas pipe 7 becomes lower than the pressure of the closed circuit. Then, in accordance with the pressure difference, the refrigerant accumulated in the outdoor heat exchanger 12b passes through the pipe 14b, the outdoor heat exchanger side port 112b, the low-pressure gas pipe side port 113b, the check valve 17b, and the branch pipe 15b, and flows into the gas pipe 7. In this way, by increasing the rotational speed of the compressor 10, the refrigerant is recovered to the refrigerant circuit. While the refrigerant recovery operation control program 34 operates to increase the rotational speed of the compressor 10, the normal operation control program 33 continues the valve opening degree control of the expansion valve 23.

Further, the refrigerant recovery operation control program 34 monitors the inlet side temperature of the indoor heat exchanger 22. Specifically, the refrigerant recovery operation control program 34 reads the inlet side temperature of the indoor heat exchanger 22 and a predetermined threshold value B from the storage program 35 during operation while increasing the rotational speed of the compressor 10, and compares the inlet side temperature with the threshold value B (step S13). The threshold value B is, for example, the temperature at which frost formation occurs in the indoor heat exchanger 22 (e.g., -1°C). When the inlet side temperature of the indoor heat exchanger 22 is equal to or higher than the threshold value B or the inlet side temperature falls below the threshold value B and a predetermined time (e.g., 3 minutes) has not elapsed (step S13; No), the processes from step S11 are repeated. For example, when the recovery of the refrigerant has been sufficiently performed, the valve opening degree of the expansion valve 23 becomes equal to or less than the threshold value A (step S11; No). The control switching program 32 determines to perform the normal operation control and instructs the refrigerant recovery operation control program 34 to stop the refrigerant recovery operation. The normal operation control program 33 executes the normal operation control (step S16).

Meanwhile, when a state in which the inlet side temperature falls below the threshold value B continues for a predetermined time or more (step S13; Yes), the refrigerant recovery operation control program 34 operates to lower the rotational speed of the compressor 10 (step S14). When the rotational speed of the compressor 10 is increased and the amount of the refrigerant flowing through the refrigerant circuit increases, the temperature of the indoor heat exchanger 22 is excessively lowered. If the excessively low temperature state continues for a while, frost formation occurs in the indoor heat exchanger 22. When the frost formation occurs in the indoor heat exchanger 22, the defrosting control operates. Therefore, the refrigerant recovery operation control program 34 monitors the inlet side temperature of the indoor heat exchanger 22 so that the defrosting control does not operate, and when the condition under which the frost formation may occur (the state in which the inlet side temperature falls below the threshold value B continues for a predetermined time) is satisfied, the refrigerant recovery operation control program 34 lowers the rotational speed of the compressor 10. When the rotational speed of the compressor 10 is lowered, the amount of refrigerant flowing through the refrigerant circuit also decreases, and the temperature of the indoor heat exchanger 22 rises. Thus, it is possible to prevent the indoor heat exchanger 22 from being excessively cooled, avoid frost formation, and attain a stable operation of the air conditioner 100. When the amount of the refrigerant flowing through the refrigerant circuit decreases, the temperature of the refrigerant flowing through the low-pressure gas pipe 7 rises higher than before and the pressure also rises. In a state in which the rotational speed of the compressor 10 is lowered, since the difference between the pressure of the low-pressure gas pipe 7 and the pressure of the closed circuit decreases, the recovery process of the refrigerant stagnates. In this state, in order to prevent the pressure of the low-pressure gas pipe 7 from becoming higher than the pressure of the closed circuit again and to prevent the refrigerant from moving to the outdoor heat exchanger 12b, the pressure of the closed circuit is measured, and the refrigerant recovery operation control program 34 may perform a control such that the pressure of the low-pressure gas pipe 7 does not exceed the pressure of the closed circuit. Even while performing the operation with the reduced rotational speed, the normal operation control program 33 continues the valve opening degree control of the expansion valve 23.

If the operation with the reduced rotational speed is continued for a while, the refrigerant recovery operation control program 34 determines whether or not the inlet temperature of the indoor heat exchanger becomes equal to or higher than a predetermined threshold value C (e.g., 0°C) (step S15). When the inlet temperature of the indoor heat exchanger does not reach the threshold value C (step S15; No), the refrigerant recovery operation control program 34 continues the operation with the reduced rotational speed. When the inlet temperature of the indoor heat exchanger becomes equal to or higher than the threshold value C (step S15; Yes), the processes from step S11 are repeated. How long the operation with reduced rotational speed should be continued, for example, may be determined according to whether the refrigerant recovery operation control program 34 has continued the low rotational speed operation for a set time, which is an operation time with reduced rotational speed of the compressor 10 set in advance.

When the recovery of the refrigerant has been sufficiently performed, the valve opening degree of the expansion valve 23 becomes less than the threshold value A (step S11; No), and the control switching program 32 determines to perform the normal operation. The normal operation control program 33 executes the normal operation (step S16). When the recovery of the refrigerant is insufficient, the valve opening degree of the expansion valve 23 becomes equal to or higher than the threshold value A (step S11; Yes), and the refrigerant recovery operation control program 34 repeatedly performs the refrigerant recovery operation from step S12.

In this way, the refrigerant recovery operation control program 34 of the present embodiment raises and lowers the pressure of the low-pressure gas pipe 7 by raising and lowering the rotational speed of the compressor 10. In this way, it is possible to recover the refrigerant accumulated in the outdoor heat exchanger 12b, while preventing frost formation on the indoor heat exchanger 22. Fig. 4 shows an example of the time transition of the rotational speed of the compressor 10 controlled by the refrigerant recovery operation control program 34. In the example shown in Fig. 4, the refrigerant recovery operation control program 34 greatly raises the rotational speed of the compressor 10 in the initial stage of the refrigerant recovery operation and greatly lowers the pressure of the low-pressure gas pipe 7 to a pressure higher than that in the closed circuit, thereby rapidly recovering the refrigerant. As the amount of accumulated refrigerant decreases, the degree of increase in the rotational speed gradually decreases and the refrigerant is gradually recovered. It may also be determined how much to raise and lower the rotational speed, for example, by verification, calculation, or the like using an actual machine in advance.

According to the present embodiment, the check valve 17b prevents the flow of the refrigerant from the low-pressure gas pipe 7 to the outdoor heat exchanger 12b. Further, by guiding the high-pressure refrigerant subjected to pressure regulation (decompressed) by the capillary tube 18b to the downstream side of the check valve of the branch pipe 15b, the effect of the check valve provided by the check valve 17b is enhanced, and the flow of the refrigerant gas to the closed circuit is more reliably prevented. Thus, it is possible to prevent the refrigerant from being accumulated in the outdoor heat exchanger 12b when operation thereof has been stopped when only the outdoor heat exchanger 12a is used as a condenser under a low outside air temperature condition. Further, when operating for a long period of time under a low outside air temperature condition or the like, there is a possibility that a small amount of refrigerant gas may flow into the closed circuit from the check valve 17b and accumulate in the outdoor heat exchanger 12b. However, it is possible to recover the refrigerant accumulated in the outdoor heat exchanger 12b by controlling the rotational speed of the compressor 10, using the control device 30.

As another example of the determination criterion as to whether to start the refrigerant recovery control of step S11, when the state in which cooling of the room provided by the indoor heat exchanger 22 is insufficient continues for a predetermined time or more, it may be determined that the refrigerant has accumulated in the outdoor heat exchanger 12b. Alternatively, it may be determined that accumulation of the refrigerant has occurred when the value of the degree of superheat SH cannot maintain a predetermined value (increases). Alternatively, the pressure of the closed circuit may be measured, and when the time at which the pressure of the closed circuit falls below the pressure of the low-pressure gas pipe 7 becomes equal to or higher than the predetermined time, accumulation of the refrigerant may be determined to have occurred. Alternatively, when the state in which the outside air temperature is equal to or lower than the threshold value continues for a predetermined time or more, accumulation of refrigerant may be determined to have occurred.

<Other Example 1>

Fig. 5 is a second diagram showing an example of a circuit configuration diagram according to an embodiment of the present invention.

As shown in Fig. 5, in the circuit configuration of Fig. 1, the circuit may be configured so that the check valve 17a is not provided, and only a check valve 17b is provided to prevent the refrigerant from flowing into the closed circuit using the check valve 17b, and the refrigerant is prevented from accumulating in the outdoor heat exchanger 12b, by the refrigerant recovery operation using the control device 30. In the case of such a configuration, the control device 30 performs a control of causing only the outdoor heat exchanger 12a or both of the outdoor heat exchangers 12a and 12b to function as condensers, depending on the condensing capacity required for the outdoor heat exchangers 12a and 12b. In the case where only the outdoor heat exchanger 12a is made to function as a condenser, the control device 30 performs the control of making the compressor side port 111a and the outdoor heat exchanger side port 112a communicate with each other, making the low-pressure gas pipe side port 113a and the bypass pipe side port 114a communicate with each other, and setting the expansion valve 13a to an open state, with respect to the four-way valve 11a in which no check valve is provided in the branch pipe 15a. Further, the control device 30 performs the control of making the compressor side port 111b and the bypass pipe side port 114b communicate with each other, making the low-pressure gas pipe side port 113b and the outdoor heat exchanger side port 112b communicate with each other, and setting the expansion valve 13b to a closed state, with respect to the four-way valve 11b connected to the branch pipe 15b provided with the check valve 17b. Further, when both of the outdoor heat exchangers 12a and 12b are made to function as condensers, the same control is performed on the four-way valve 11a and the expansion valve 13a. Regarding the four-way valve 11b, the control device 30 performs the control of making the compressor side port 111b and the outdoor heat exchanger side port 112b communicate with each other, and making the low-pressure gas pipe side port 113b and the bypass pipe side port 114b communicate with each other. Further, regarding the expansion valve 13b, the control device 30 performs the control of setting the expansion valve 13a to an open state.

<Another Second Example>

Fig. 6 is a third diagram showing an example of a circuit configuration diagram according to an embodiment of the present invention.

As shown in Fig. 6, the circuit may be configured such that, in the circuit configuration of Fig. 1, the check valves 17a and 17b are not provided, and the accumulation of refrigerant in the outdoor heat exchanger 12b is prevented only by the refrigerant recovery operation provided by the control device 30.

<Another Third Example>

Fig. 7 is a fourth diagram showing an example of a circuit configuration diagram according to an embodiment of the present invention.

An air conditioner 100C of Fig. 7 is an example of a multi-type air conditioner including a plurality of indoor units 2a, 2b, 2c, and 2d. The configuration of each of the indoor units 2a, 2b, 2c, and 2d is the same as that of the example of Fig. 1. Further, the configuration of the outdoor unit 1C is the same as that of the example of Fig. 1. Further, the control device 30 is connected to the outdoor unit 1 and the indoor units 2a, 2b, 2c, and 2d. Further, the control device 30 is connected to the temperature sensors 221a, 221b, 221c, and 221d, and acquires the temperature measured by these sensors. Further, the control device 30 is connected to the expansion valves 23a, 23b, 23c, 23d, and independently controls the valve opening degrees thereof. Further, the control device 30 is connected to the branch controllers 21a, 21b, 21c and 21d, and independently performs the switching control. Other configurations of the control device 30 are the same as those of the example of Fig. 1.

The flow of the refrigerant to the indoor units 2b, 2c, and 2d that perform the cooling operation is the same as that of the example of Fig. 1. The supply of the refrigerant to the indoor unit 2a that performs the heating operation is performed as follows. In the branch controller 21a, the indoor heat exchanger side port 211a and the high-pressure gas pipe port 213a communicate with each other. Therefore, the high-pressure refrigerant gas is supplied from the high-pressure gas pipe 5 to the indoor heat exchanger 22a through the branch controller 21a, and is condensed and liquefied in the indoor heat exchanger 22a. The liquefied high-pressure refrigerant liquid flows into the liquid pipe 9.

The air conditioner 100C can independently perform the cooling operation, the heating operation, and the stopping of operation for each indoor unit. In the example of Fig. 7, the indoor unit 2a performs the heating operation, and the indoor units 2b, 2c, and 2d perform the cooling operation. In this way, an operation in which the number of indoor units performing the cooling operation is larger than the number of indoor units performing the heating operation is referred to as a cooling-based operation. In the case where the cooling operation is performed by all the indoor units 2a, 2b, 2c, and 2d or the cooling-based operation is performed, the air conditioner 100C operates the outdoor heat exchangers 12a and 12b as condensers. Further, when the load of the indoor units 2b, 2c, and 2d is not large and the condensing capacity of the condenser becomes excessive under the condition of low outside temperature, as in the embodiment explained in, for example, Fig. 1, in some cases, the outdoor heat exchanger 12b may be stopped and only the outdoor heat exchanger 12a may be operated as a condenser.

In this case, if the conventional configuration having no check valves 17a and 17b is provided, the refrigerant accumulates in the outdoor heat exchanger 12b, the amount of refrigerant becomes insufficient, and the capacity of the air conditioner 100C is lowered. That is, due to the shortage of the refrigerant, the indoor unit 2a may be unheated and the indoor unit 2b, 2c, and 2d may be uncooled. However, according to the circuit configuration of this embodiment, it is possible to prevent inflow of the refrigerant from the low-pressure gas pipe 7 into the closed circuit using the check valve 17b. Further, the relatively high-pressure refrigerant gas is supplied to the downstream side of the check valve 17b by the capillary tube 18b, and the effect of preventing the reverse flow in the check valve 17b is enhanced. Accordingly, it is possible to more reliably prevent the inflow of the refrigerant into the closed circuit using the check valve 17b. Therefore, it is possible to prevent the refrigerant from accumulating in the outdoor heat exchanger 12b. Even when accumulation occurs due to minute leakage of the refrigerant from the check valve 17b or the like, the refrigerant accumulated in the outdoor heat exchanger 12b can be recovered by the refrigerant recovery operation of the control device 30. As a result, it is possible to prevent non-heating of the indoor unit 2a and non-cooling of the indoor units 2b, 2c, and 2d.

When performing the refrigerant recovery operation with the configuration of the multi-type air conditioner, the control device 30 may determine that the recovery is completed when the valve opening degree of the expansion valve of a predetermined proportion enters an appropriate region. For example, in the case of the air conditioner 100C, when 75% (3 out of 4) expansion valves (e.g., the expansion valves 23a, 23b, and 23c) leave the 100% state to reach, for example, 70%, the refrigerant recovery operation control program 34 may determine that the recovery of the refrigerant is completed.

Further, also in the case of the multi-type air conditioner, only the check valve 17b corresponding to the outdoor heat exchanger 12b for performing stopping of operation may be provided, and the check valve 17a corresponding to the outdoor heat exchanger 12a which is always operated may not be provided.

Also, up to now, the outdoor heat exchanger has been described using two examples thereof, but the number of outdoor heat exchangers may be three or more. In that case, in the configuration in which the check valve 17b or the like is provided, a check valve is provided in the branch pipe 15b or the like corresponding to at least the outdoor heat exchanger 12b that stops operation.

In addition, it is possible to substitute the constituent elements in the above-described embodiment for well-known constituent elements within a scope that does not depart from the scope of the present invention. Further, the technical scope of the present invention is not limited to the above-described embodiments, and various modifications can be made within a scope that does not depart from that of the present invention. The normal operation control program 33 is an example of the expansion valve control program. The outdoor heat exchanger 12a is an example of a first outdoor heat exchanger, and the outdoor heat exchanger 12b is an example of a second outdoor heat exchanger.

While preferred embodiments of the invention have been described and shown above, it should be understood that these are exemplary of the invention and are not to be considered as limiting. Additions, omissions, substitutions, and other modifications can be made without departing from the scope of the present invention. Accordingly, the Accordingly, the invention is not to be considered as being limited by the foregoing description, and is only limited by the scope of the appended claims.

EXPLANATION OF REFERENCES

1 Outdoor unit
2 Indoor unit
5 High-pressure gas pipe
7 Low-pressure gas pipe
9 Liquid pipe
10 Compressor
11a, 11b Four-way valve
12a, 12b Outdoor heat exchanger
13a, 13b Expansion valve
14a, 14b Pipe
15a, 15b Branch pipe
16a, 16b Bypass pipe
17a, 17b Check valve
18a, 18b Capillary tube
21 Branch controller
22 Indoor heat exchanger
23 Expansion valve
30 Control device
31 Sensor information acquisition program
32 Control switching program
33 Normal operation control program
34 Refrigerant recovery operation control program
35 Storage program
100 Air conditioner
101 Pressure sensor
111a, 111b Compressor side port
112a, 112b Outdoor heat exchanger side port
113a, 113b Low-pressure gas pipe side port
114a, 114b Bypass pipe side port
211 Indoor heat exchanger side port
212 Low-pressure gas pipe port
213 High-pressure gas pipe port
221 Temperature sensor

**Claims**

**1.** A control device (30) for controlling a refrigerant circuit including a compressor (10) configured to compress a refrigerant, a first outdoor heat exchanger (12a) configured to liquefy the refrigerant, a second outdoor heat exchanger (12b) during operation stop configured not to function as either a condenser or an evaporator, an expansion valve (23) configured to lower the pressure of the liquefied refrigerant, and an indoor heat exchanger (22) configured to evaporate the low-pressure refrigerant, the control device (30) comprising:

a control switching program (32) which is configured to, when a valve opening degree of the expansion valve (23) of the refrigerant circuit becomes equal to or larger than a predetermined threshold value, determine that the refrigerant has accumulated in the second outdoor heat exchanger (12b), and switch from a normal operation to a refrigerant recovery operation; **characterised by**
a refrigerant recovery operation control program (34) which is configured to, when the control switching program (32) switches to the refrigerant recovery operation, increase a rotational speed of the compressor (10) and controls the pressure on a suction side of the compressor to be lower than the pressure of the second outdoor heat exchanger (12b).

**2.** A control device (30) for controlling a refrigerant circuit including a compressor (10) configured to compress a refrigerant, a first outdoor heat exchanger (12a) configured to liquefy the refrigerant, a second outdoor heat exchanger (12b) during operation stop configured not to function as either a condenser or an evaporator, an expansion valve (23) configured to lower the pressure of the liquefied refrigerant, and an indoor heat exchanger (22) configured to evaporate the low-pressure refrigerant, the control device (30) comprising:

a control switching program (32) which is configured to, when a state in which indoor cooling due to the indoor heat exchanger (22) is insufficient continues for a predetermined time or more, determine that the refrigerant has accumulated in the second outdoor heat exchanger (12b), and switch from a normal operation to a refrigerant recovery operation; **characterised by**
a refrigerant recovery operation control program (34) which is configured to, when the control switching program (32) switches to the refrigerant recovery operation, increase a rotational speed of the compressor (10) and controls the pressure on a suction side of the compressor to be lower than the pressure of the second outdoor heat exchanger (12b).

**3.** The control device (30) according to claim 1 or 2, wherein the refrigerant recovery operation control program (34) is configured to limit the rotational speed of the compressor (10) so that the defrosting control on the indoor heat exchanger does not operate.

**4.** The control device (30) according to claim 3, wherein, when a state in which the temperature on an inlet side of the indoor heat exchanger (22) is equal to or lower than a predetermined first threshold value continues for a predetermined time or more, the refrigerant recovery operation control program (34) is configured to lower the rotational speed of the compressor (10).

**5.** The control device (30) according to claim 4, wherein, when the temperature on the inlet side of the indoor heat exchanger (22) is equal to or higher than a predetermined second threshold value after lowering the rotational speed of the compressor (10), the refrigerant recovery operation control program (34) is configured to increase the rotational speed of the compressor (10) again.

**6.** The control device (30) according to any one of claims 1 to 5, further comprising:

an expansion valve control program which calculates a degree of superheat, using the temperature on the outlet side of the indoor heat exchanger (22) and the temperature on the inlet side, and controls the opening degree of the expansion valve (23) so that the degree of superheat becomes a predetermined value,
wherein the refrigerant recovery operation control program (34) continues to control the rotational speed of the compressor (10), until the opening degree of the expansion valve (23) controlled by the expansion valve control program becomes smaller than a predetermined threshold value.

**7.** An air conditioner (100) comprising:

an outdoor unit (1) which includes a compressor (10) configured to compress a refrigerant, a plurality of outdoor heat exchangers (12a, 12b) configured to exchange heat between the refrigerant and outdoor air, and a four-way valve (11a, 11b) provided to correspond to each of the plurality of outdoor heat exchangers (12a, 12b);
at least one indoor (2) unit which includes an indoor heat exchanger (22) configured to exchange heat between the refrigerant and indoor air; and
the control device (30) according to any one of claims 1 to 6.

**8.** A method for controlling a refrigerant circuit including a compressor (10) configured to compress a refrigerant, a first outdoor heat exchanger (12a) configured to liquefy the refrigerant, a second outdoor heat exchanger (12b) during operation stop configured not to function as either a condenser or an evaporator, an expansion valve (23) configured to lower the pressure of the liquefied refrigerant, and an indoor heat exchanger (22) configured to evaporate the low-pressure refrigerant, the method comprising:

determining that the refrigerant has accumulated in the second outdoor heat exchange (12b), when a valve opening degree of the expansion valve (23) becomes equal to or larger than a predetermined threshold value; and performing a control of increasing the rotational speed of the compressor (10) so that the pressure on a suction side of the compressor (10) becomes lower than the pressure of the second outdoor heat exchanger (12b), when it is determined that the refrigerant has accumulated in the second outdoor heat exchanger (12b).

## Patentansprüche

1. Steuervorrichtung (30) zum Steuern eines Kältemittelkreislaufs, umfassend einen Verdichter (10), der zum Verdichten eines Kältemittels konfiguriert ist, einen ersten Außenwärmetauscher (12a), der zum Verflüssigen des Kältemittels konfiguriert ist, einen zweiten Außenwärmetauscher (12b), der konfiguriert ist, bei Betriebsunterbrechung weder als ein Kondensator noch als ein Verdampfer zu wirken, ein Expansionsventil (23), das zum Absenken des Drucks des verflüssigten Kältemittels konfiguriert ist, und einen Innenwärmetauscher (22), der zum Verdampfen des Niederdruckkältemittels konfiguriert ist, wobei die Steuervorrichtung (30) Folgendes aufweist:
ein Steuerschaltprogramm (32), das konfiguriert ist, um, wenn ein Ventilöffnungsgrad des Expansionsventils (23) des Kältemittelkreislaufs gleich oder größer als ein im Voraus bestimmter Schwellenwert wird, zu bestimmen, dass sich das Kältemittel in dem zweiten Außenwärmetauscher (12b) angesammelt hat, und von einem Normalbetrieb auf einen Kältemittelrückgewinnungsbetrieb zu schalten; **gekennzeichnet durch**:
ein Kältemittelrückgewinnungsbetrieb-Steuerprogramm (34), das konfiguriert ist, um, wenn das Steuerschaltprogramm (32) auf Kältemittelrückgewinnungsbetrieb umschaltet, eine Drehzahl des Verdichters (10) zu erhöhen, und den Druck auf einer Saugseite des Verdichters so zu steuern, dass er niedriger ist als der Druck des zweiten Außenwärmetauschers (12b).

2. Steuervorrichtung (30) zum Steuern eines Kältemittelkreislaufs, umfassend einen Verdichter (10), der zum Verdichten eines Kältemittels konfiguriert ist, einen ersten Außenwärmetauscher (12a), der zum Verflüssigen des Kältemittels konfiguriert ist, einen zweiten Außenwärmetauscher (12b), der konfiguriert ist, bei Betriebsunterbrechung weder als ein Kondensator noch als ein Verdampfer zu wirken, ein Expansionsventil (23), das zum Absenken des Drucks des verflüssigten Kältemittels konfiguriert ist, und einen Innenwärmetauscher (22), der zum Verdampfen des Niederdruckkältemittels konfiguriert ist, wobei die Steuervorrichtung (30) Folgendes aufweist:
ein Steuerschaltprogramm (32), das konfiguriert ist, um, wenn ein Zustand, in dem eine Innenraumkühlung aufgrund des Innenwärmetauschers (22) unzulänglich ist, während einer im Voraus bestimmten Zeit oder länger andauert, zu bestimmen, dass sich das Kältemittel in dem zweiten Außenwärmetauscher (12b) angesammelt hat, und von einem Normalbetrieb auf einen Kältemittelrückgewinnungsbetrieb zu schalten; **gekennzeichnet durch**:
ein Kältemittelrückgewinnungsbetrieb-Steuerprogramm (34), das konfiguriert ist, um, wenn das Steuerschaltprogramm (32) auf Kältemittelrückgewinnungsbetrieb umschaltet, eine Drehzahl des Verdichters (10) zu erhöhen, und den Druck auf einer Saugseite des Verdichters so zu steuern, dass er niedriger ist als der Druck des zweiten Außenwärmetauschers (12b).

3. Steuervorrichtung (30) nach Anspruch 1 oder 2, wobei das Kältemittelrückgewinnungsbetrieb-Steuerprogramm (34), so konfiguriert ist, dass es die Drehzahl des Verdichters (10) begrenzt, so dass die Entfrostungssteuerung am Innenwärmetauscher nicht arbeitet.

4. Steuervorrichtung (30) nach Anspruch 3, wobei, wenn ein Zustand, in dem die Temperatur auf einer Einlassseite des Innenwärmetauschers (22) gleich oder niedriger als ein im Voraus bestimmter erster Schwellenwert ist, während einer im Voraus bestimmten Zeit oder länger andauert, das Kältemittelrückgewinnungsbetrieb-Steuerprogramm (34), so konfiguriert ist, dass es die Drehzahl des Verdichters (10) absenkt.

5. Steuervorrichtung (30) nach Anspruch 4, wobei, wenn die Temperatur auf der Einlassseite des Innenwärmetauschers (22) nach dem Absenken der Drehzahl des Verdichters (10) gleich oder höher als ein im Voraus bestimmter zweiter Schwellenwert ist, das Kältemittelrückgewinnungsbetrieb-Steuerprogramm (34) so konfiguriert ist, dass es die Drehzahl des Verdichters (10) erneut erhöht.

6. Steuervorrichtung (30) nach einem der Ansprüche 1 bis 5, ferner umfassend:

ein Expansionsventil-Steuerprogramm, das unter Verwendung der Temperatur auf der Auslassseite des Innenwärmetauschers (22) und der Temperatur auf der Einlassseite einen Überhitzungsgrad berechnet und den Öffnungsgrad des Expansionsventils (23) so steuert, dass der Überhitzungsgrad einen im Voraus bestimmten Wert wird,
wobei das Kältemittelrückgewinnungsbetrieb-Steuerprogramm (34) die Drehzahl des Verdichters (10) weiterhin steuert, bis der durch das Expansionsventilsteuerprogramm gesteuerte Öffnungsgrad des Expansionsventils (23) kleiner wird als ein im Voraus bestimmter Schwellenwert.

**7.** Klimaanlage (100), umfassend:

eine Außeneinheit (1), umfassend einen Verdichter (10) der zum Verdichten eines Kältemittels konfiguriert ist, mehrere Außenwärmetauscher (12a, 12b), die zum Austauschen von Wärme zwischen dem Kältemittel und der Außenluft konfiguriert sind, und ein Vierwegeventil (11a, 11b), das so vorgesehen ist, dass es jedem der mehreren Außenwärmetauscher (12a, 12b) entspricht;
mindestens eine Inneneinheit (2), umfassend einen Innenwärmetauscher (22), der zum Austauschen von Wärme zwischen dem Kältemittel und der Innenluft konfiguriert ist; und
die Steuervorrichtung (30) nach einem der Ansprüche 1 bis 6.

**8.** Verfahren zum Steuern eines Kältemittelkreislaufs umfassend einen Verdichter (10), der zum Verdichten eines Kältemittels konfiguriert ist, einen ersten Außenwärmetauscher (12a), der zum Verflüssigen des Kältemittels konfiguriert ist, einen zweiten Außenwärmetauscher (12b), der konfiguriert ist, bei Betriebsunterbrechung weder als ein Kondensator noch als ein Verdampfer zu wirken, ein Expansionsventil (23), das zum Absenken des Drucks des verflüssigten Kältemittels konfiguriert ist, und einen Innenwärmetauscher (22), der zum Verdampfen des Niederdruckkältemittels konfiguriert ist, wobei das Verfahren umfasst:

Bestimmen, dass sich das Kältemittel im zweiten Außenwärmetauscher (12b) angesammelt hat, wenn ein Ventilöffnungsgrad des Expansionsventils (23) gleich oder größer als ein im Voraus bestimmter Schwellenwert wird; und
Durchführen eines Steuervorgangs zum Erhöhen der Drehzahl des Verdichters (10), so dass der Druck auf einer Saugseite des Verdichters (10) niedriger als der Druck des zweiten Außenwärmetauschers (12b) wird, wenn bestimmt wird, dass sich das Kältemittel im zweiten Außenwärmetauscher (12b) angesammelt hat.

## Revendications

**1.** Dispositif de commande (30) pour commander un circuit de réfrigérant comprenant un compresseur (10) configuré pour comprimer un réfrigérant, un premier échangeur de chaleur extérieur (12a) configuré pour liquéfier le réfrigérant, un second échangeur de chaleur extérieur (12b) configuré pour, pendant l'opération d'arrêt, ne pas servir de condenseur ni d'évaporateur, une valve d'expansion (23) configurée pour abaisser la pression du réfrigérant liquéfié, et un échangeur de chaleur intérieur (22) configuré pour évaporer le réfrigérant basse pression, le dispositif de commande (30) comprenant :
un programme de commutation de commande (32) qui est configuré pour, lorsqu'un degré d'ouverture de valve de la valve d'expansion (23) du circuit de réfrigérant est égal ou supérieur à une valeur de seuil prédéterminée, déterminer que le réfrigérant s'est accumulé dans le second échangeur de chaleur extérieur (12b) et commuter d'un fonctionnement normal à une opération de récupération de réfrigérant ; **caractérisé par** :
un programme de commande d'opération de récupération de réfrigérant (34) qui est configuré pour, lorsque le programme de commutation de commande (32) commute à l'opération de récupération de réfrigérant, augmenter une vitesse de rotation du compresseur (10) et commande la pression du côté de l'aspiration du compresseur pour qu'elle soit inférieure à la pression du second échangeur de chaleur extérieur (12b).

**2.** Dispositif de commande (30) pour commander un circuit de réfrigérant comprenant un compresseur (10) configuré pour comprimer un réfrigérant, un premier échangeur de chaleur extérieur (12a) configuré pour liquéfier le réfrigérant, un second échangeur de chaleur extérieur (12b) configuré pour, pendant l'opération d'arrêt, ne pas servir de condenseur ni d'évaporateur, une valve d'expansion (23) configurée pour abaisser la pression du réfrigérant liquéfié, et un échangeur de chaleur intérieur (22) configuré pour évaporer le réfrigérant basse pression, le dispositif de commande (30) comprenant :
un programme de commutation de commande (32) qui est configuré pour, lorsqu'un état dans lequel le refroidissement intérieur dû à l'échangeur de chaleur intérieur (22) est insuffisant, continue pendant une période de temps prédéterminée ou plus, déterminer que le réfrigérant s'est accumulé dans le second échangeur de chaleur extérieur (12b), et commuter d'un fonctionnement normal à une opération de récupération de réfrigérant ; **caractérisé par** : un programme de commande d'opération de récupération de réfrigérant (34) qui est configuré pour, lorsque le programme de commutation de commande (32) commute à l'opération de récupération de réfrigérant, augmenter une vitesse de rotation du compresseur (10) et commande la pression du côté de l'aspiration du compresseur pour qu'elle soit inférieure à la pression du second échangeur de chaleur extérieur (12b).

**3.** Dispositif de commande (30) selon la revendication 1 ou 2, dans lequel le programme de commande d'opération de récupération de réfrigérant (34) est configuré pour limiter la vitesse de rotation du compresseur (10) de sorte que la commande de dégivrage sur l'échangeur de chaleur intérieur ne fonctionne pas.

**4.** Dispositif de commande (30) selon la revendication 3, dans lequel, lorsqu'un état dans lequel la température du côté de l'entrée de l'échangeur de chaleur intérieur (22) est égale ou inférieure à une première valeur de seuil prédéterminée, continue pendant une période de temps prédéterminée ou plus, le programme de commande d'opération de récupération de réfrigérant (34) est configuré pour abaisser la vitesse de rotation du compresseur (10).

**5.** Dispositif de commande (30) selon la revendication 4, dans lequel, lorsque la température du côté de l'entrée de l'échangeur de chaleur intérieur (22) est égale ou supérieure à une seconde valeur de seuil prédéterminée après l'abaissement de la vitesse de rotation du compresseur (10), le programme de commande d'opération de récupération de réfrigérant (34) est configuré pour augmenter à nouveau la vitesse de rotation du compresseur (10).

**6.** Dispositif de commande (30) selon l'une quelconque des revendications 1 à 5, comprenant en outre :

un programme de commande de valve d'expansion qui calcule un degré de surchauffe, en utilisant la température du côté de la sortie de l'échangeur de chaleur intérieur (22) et la température du côté de l'entrée, et commande le degré d'ouverture de la valve d'expansion (23) de sorte que le degré de surchauffe devient une valeur prédéterminée,

dans lequel le programme de commande d'opération de récupération de réfrigérant (34) continue à commander la vitesse de rotation du compresseur (10), jusqu'à ce que le degré d'ouverture de la valve d'expansion (23) commandée par le programme de commande de valve d'expansion, devienne inférieur à une valeur de seuil prédéterminée.

**7.** Climatiseur (100) comprenant :

une unité extérieure (1) qui comprend un compresseur (10) configuré pour comprimer un réfrigérant, une pluralité d'échangeurs de chaleur extérieurs (12a, 12b) configurés pour échanger la chaleur entre le réfrigérant et l'air extérieur, et une valve à quatre voies (11a, 11b) prévue pour correspondre à chacun de la pluralité d'échangeurs de chaleur extérieurs (12a, 12b) ;

au moins une unité intérieure (2) qui comprend un échangeur de chaleur intérieur (22) configuré pour échanger la chaleur entre le réfrigérant et l'air intérieur ; et

le dispositif de commande (30) selon l'une quelconque des revendications 1 à 6.

**8.** Procédé pour commander un circuit de réfrigérant comprenant un compresseur (10) configuré pour comprimer un réfrigérant, un premier échangeur de chaleur extérieur (12a) configuré pour liquéfier le réfrigérant, un second échangeur de chaleur extérieur (12b) configuré pour, pendant l'opération d'arrêt, ne pas servir de condenseur ni d'évaporateur, une valve d'expansion (23) configurée pour abaisser la pression du réfrigérant liquéfié, et un échangeur de chaleur intérieur (22) configuré pour évaporer le réfrigérant basse pression, le procédé comprenant les étapes suivantes :

déterminer que le réfrigérant s'est accumulé dans le second échangeur de chaleur extérieur (12b) lorsqu'un degré d'ouverture de valve de la valve d'expansion (23) devient égal ou supérieur à une valeur de seuil prédéterminée ; et

réaliser une commande pour augmenter la vitesse de rotation du compresseur (10) de sorte que la pression du côté de l'aspiration du compresseur (10) devient inférieure à la pression du second échangeur de chaleur extérieur (12b), lorsque l'on détermine que le réfrigérant s'est accumulé dans le second échangeur de chaleur extérieur (12b).

FIG. 1

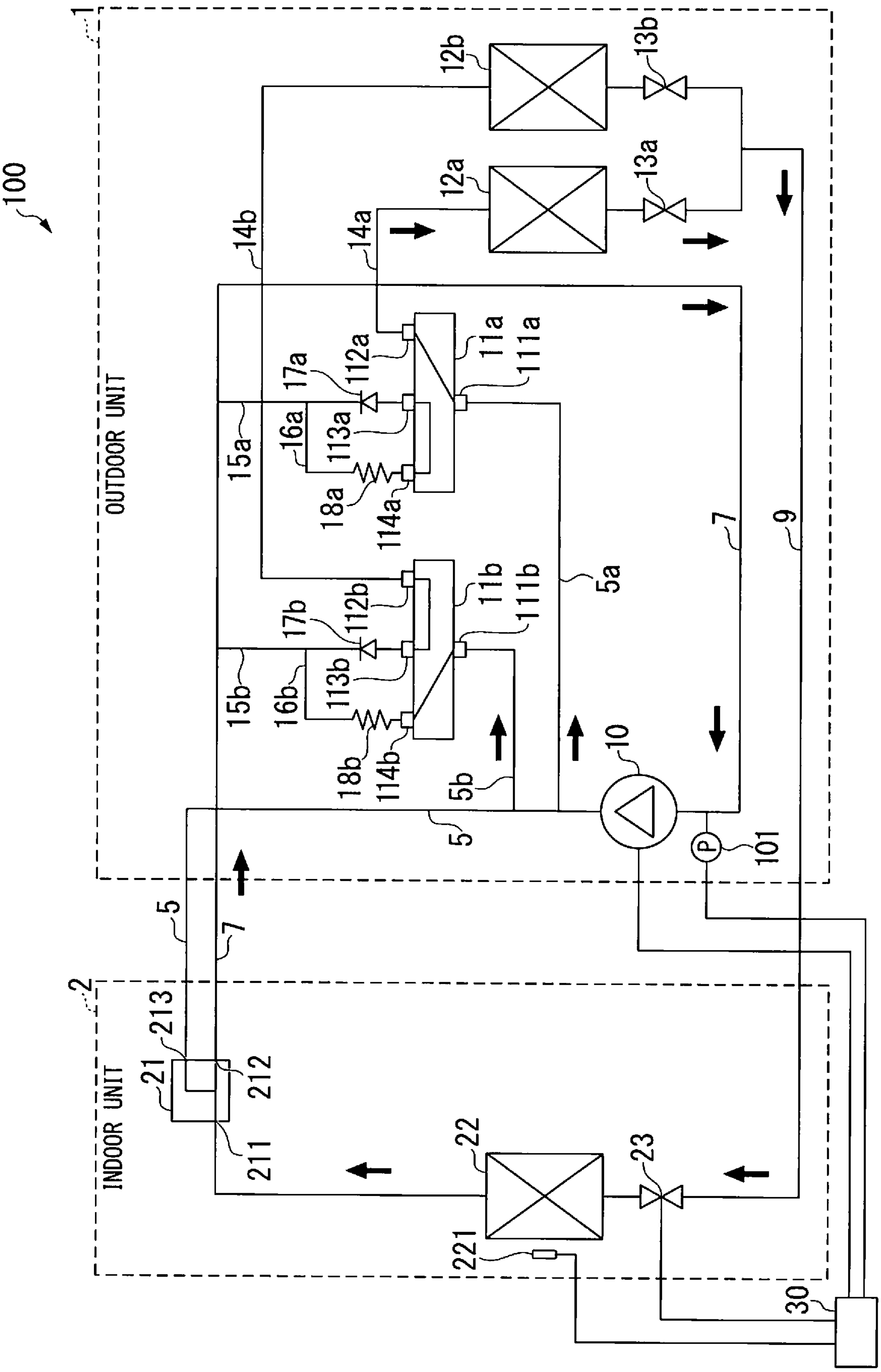
100
1
OUTDOOR UNIT
2
INDOOR UNIT
5
5a
5b
7
9
10
101
11a
11b
111a
111b
112a
112b
113a
113b
114a
114b
12a
12b
13a
13b
14a
14b
15a
15b
16a
16b
17a
17b
18a
18b
21
211
212
213
22
221
23
30

FIG. 2

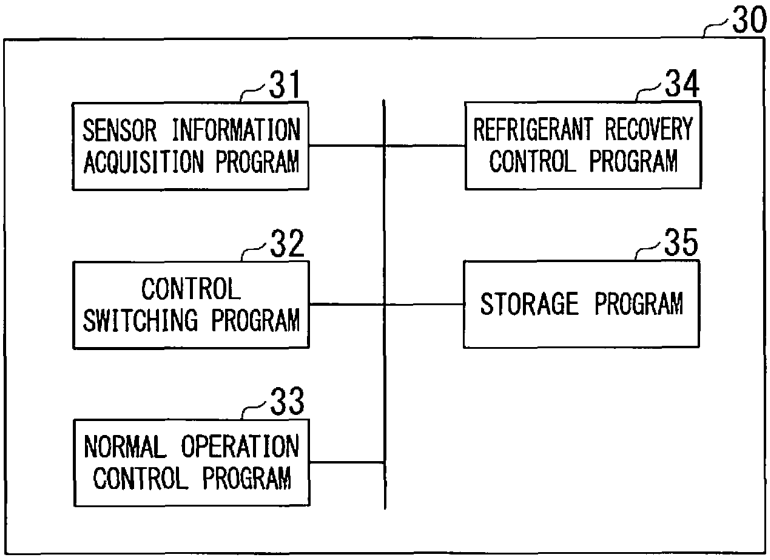
30
31
SENSOR INFORMATION ACQUISITION PROGRAM
32
CONTROL SWITCHING PROGRAM
33
NORMAL OPERATION CONTROL PROGRAM
34
REFRIGERANT RECOVERY CONTROL PROGRAM
35
STORAGE PROGRAM

FIG. 3

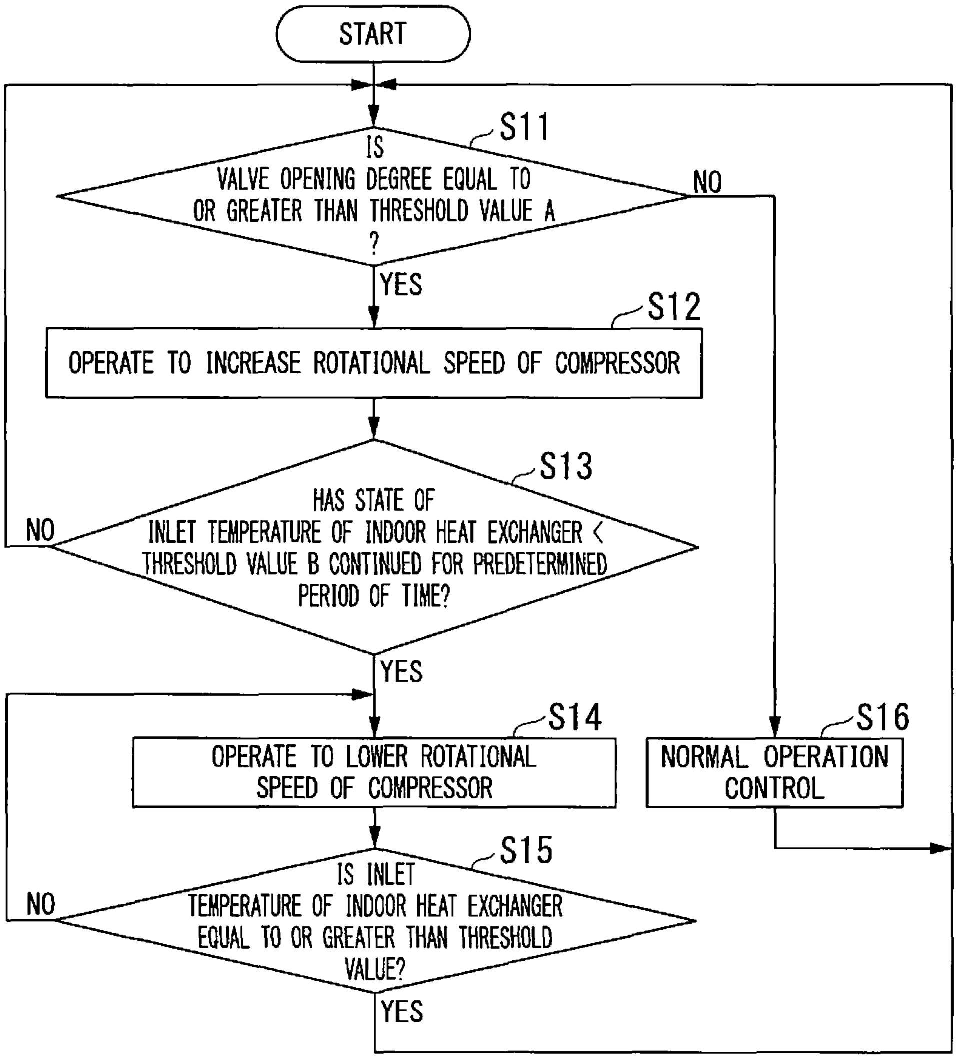
START
S11
IS VALVE OPENING DEGREE EQUAL TO OR GREATER THAN THRESHOLD VALUE A ?
NO
YES
S12
OPERATE TO INCREASE ROTATIONAL SPEED OF COMPRESSOR
S13
HAS STATE OF INLET TEMPERATURE OF INDOOR HEAT EXCHANGER < THRESHOLD VALUE B CONTINUED FOR PREDETERMINED PERIOD OF TIME?
NO
YES
S14
OPERATE TO LOWER ROTATIONAL SPEED OF COMPRESSOR
S16
NORMAL OPERATION CONTROL
S15
IS INLET TEMPERATURE OF INDOOR HEAT EXCHANGER EQUAL TO OR GREATER THAN THRESHOLD VALUE?
NO
YES

FIG. 4

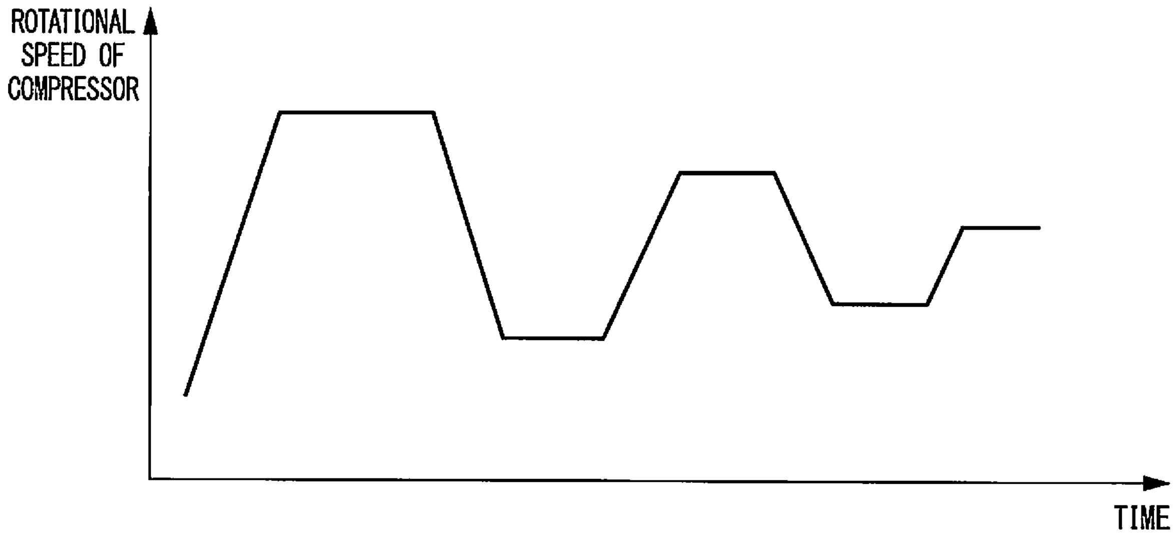

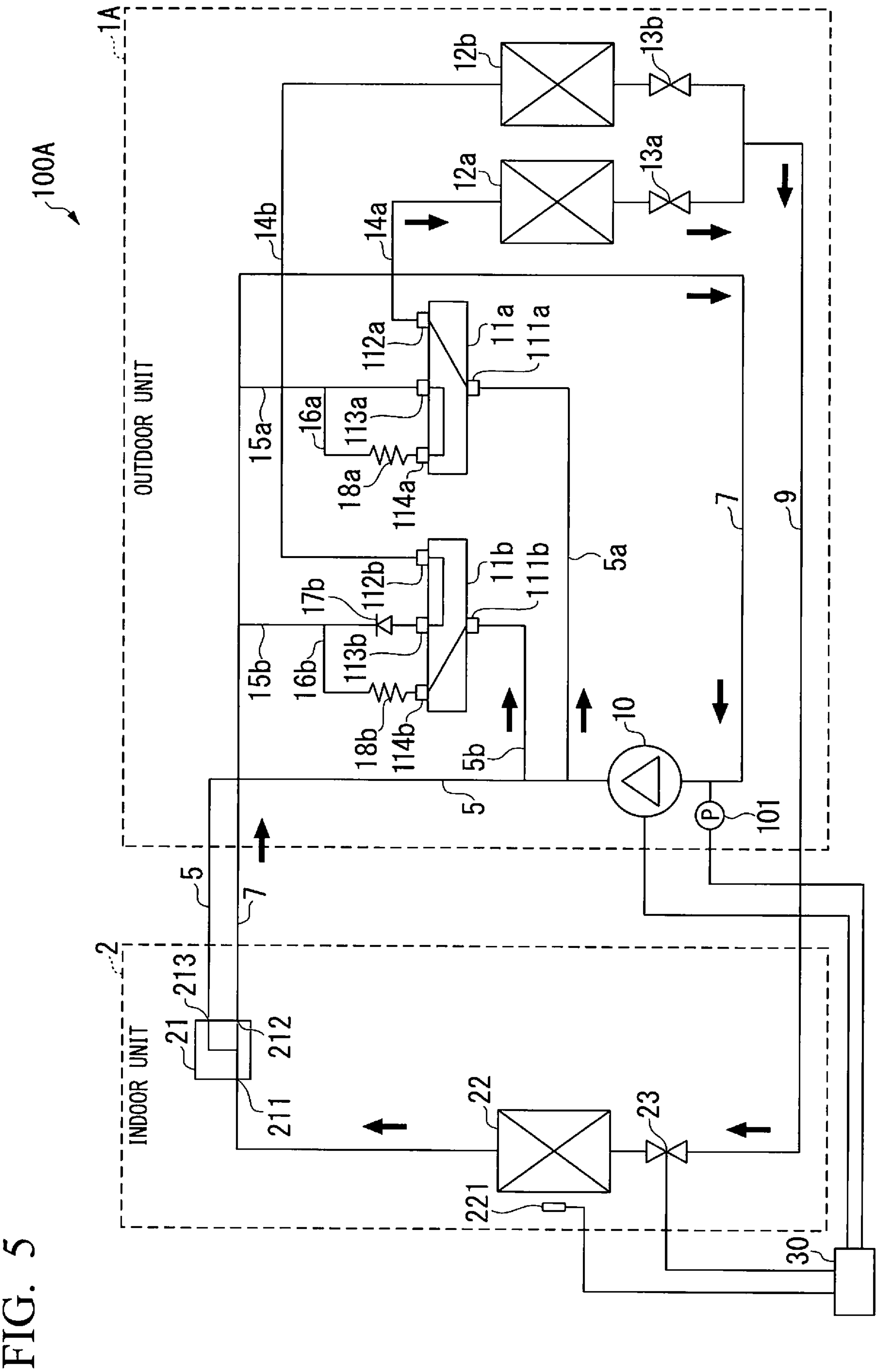
100A
1A
OUTDOOR UNIT
12b
13b
12a
13a
14b
14a
112a
11a
111a
15a
16a
113a
18a
114a
7
9
5a
11b
111b
112b
17b
15b
16b
113b
18b
114b
5b
10
5
101
5
7
2
INDOOR UNIT
213
21
212
211
22
23
221
30

FIG. 5

FIG. 6

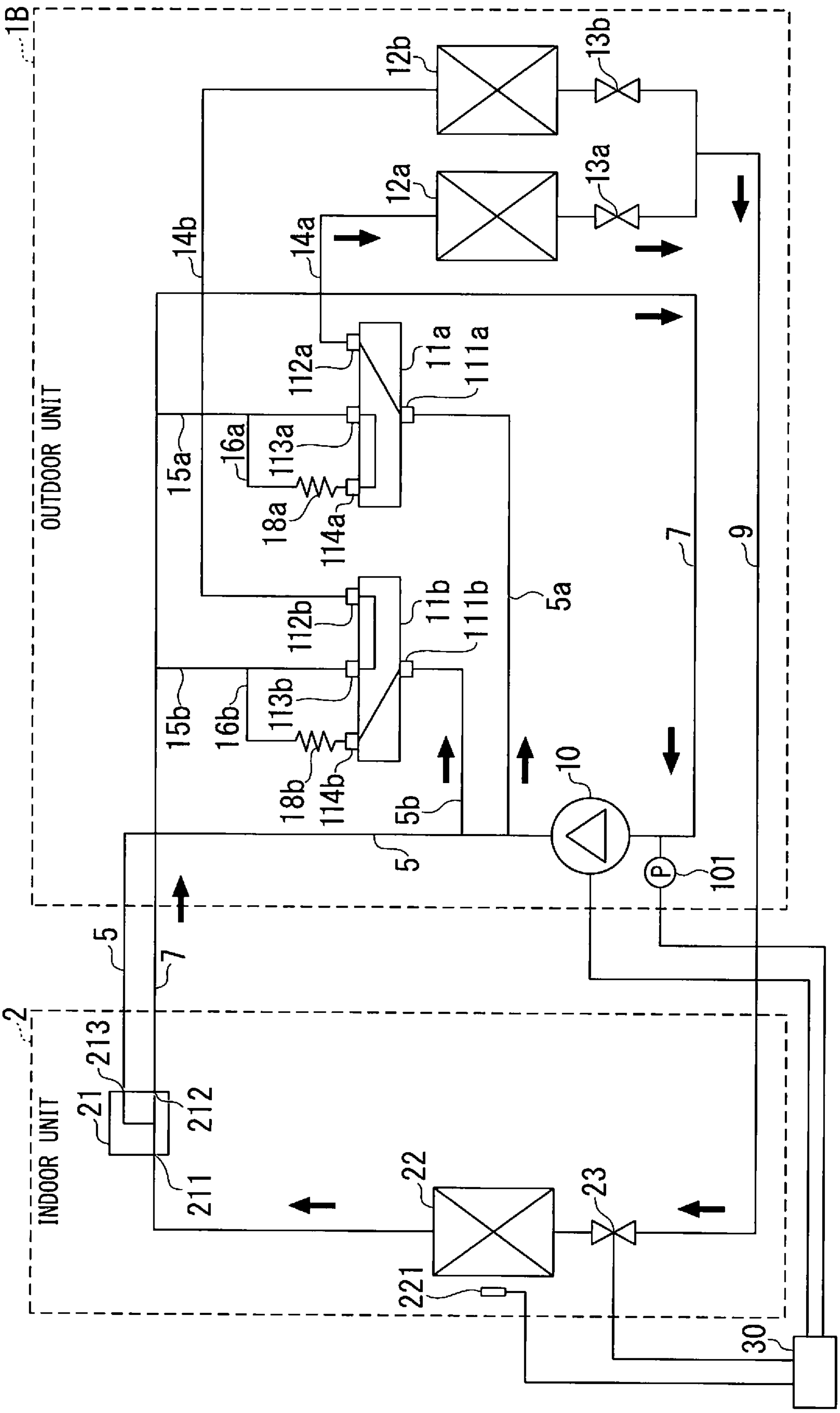
1B
OUTDOOR UNIT
12b
13b
12a
13a
14b
14a
112a
11a
111a
16a
113a
15a
18a
114a
7
9
5a
11b
111b
112b
15b
16b
113b
18b
114b
5b
10
5
101
P
5
7
2
INDOOR UNIT
213
21
212
211
22
23
221
30

FIG. 7

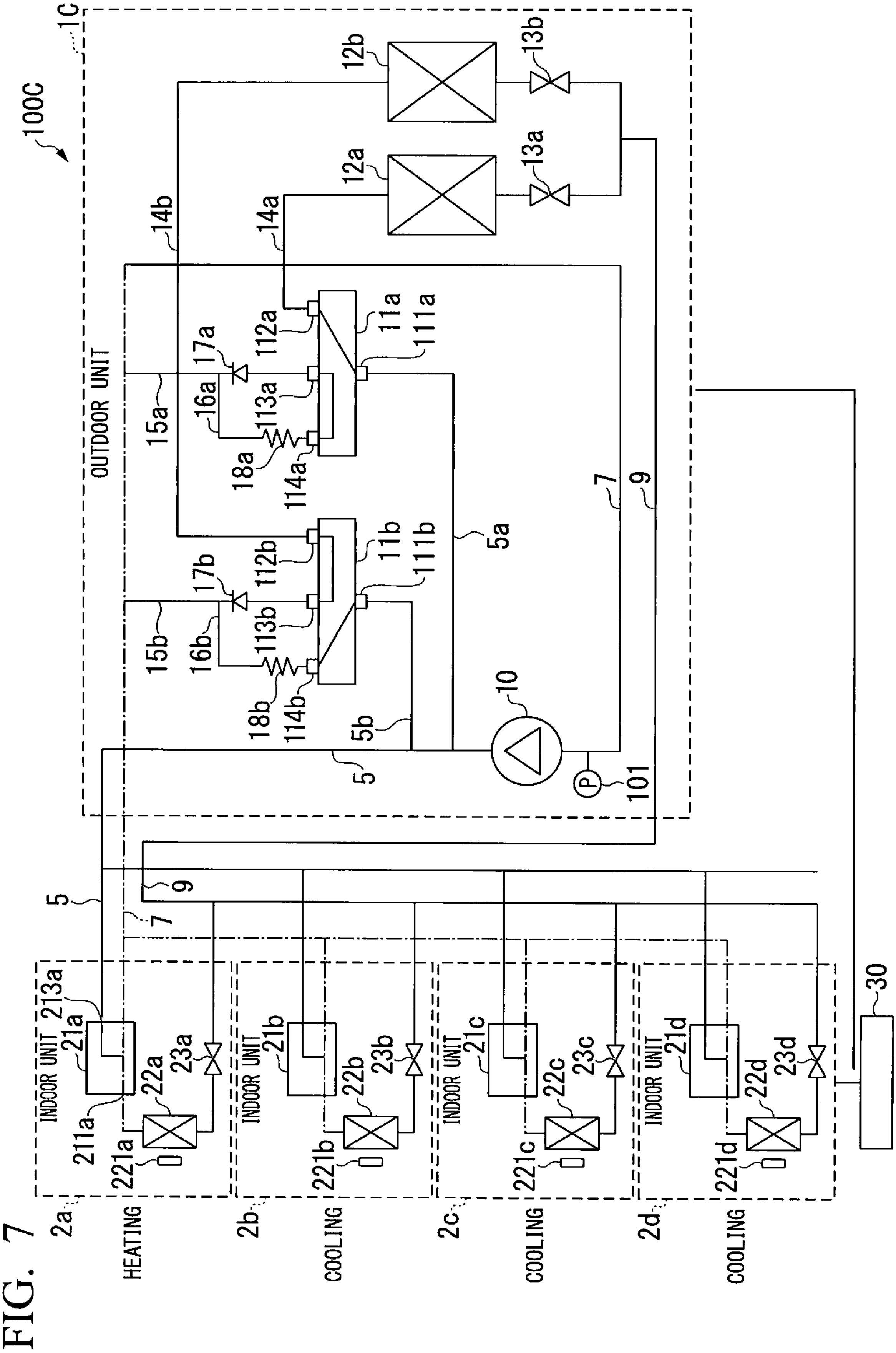
100C
1C
OUTDOOR UNIT
12a
12b
13a
13b
14a
14b
11a
11b
111a
111b
112a
112b
113a
113b
114a
114b
15a
15b
16a
16b
17a
17b
18a
18b
5
5a
5b
7
9
10
P
101
INDOOR UNIT
21a
21b
21c
21d
211a
213a
22a
22b
22c
22d
221a
221b
221c
221d
23a
23b
23c
23d
2a
2b
2c
2d
HEATING
COOLING
COOLING
COOLING
30

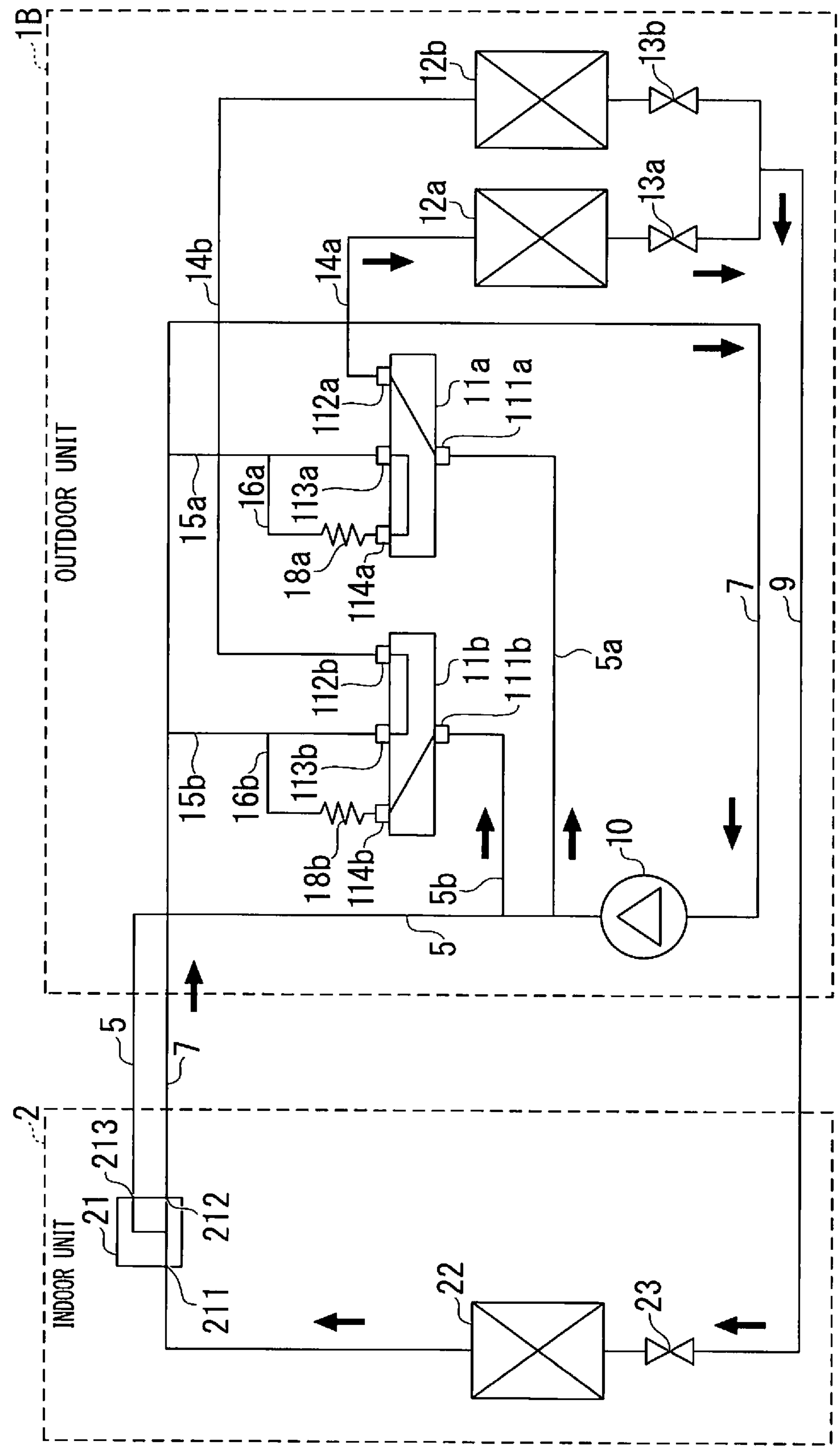
OUTDOOR UNIT
INDOOR UNIT
1B
2
5
5a
5b
7
9
10
11a
11b
111a
111b
112a
112b
113a
113b
114a
114b
12a
12b
13a
13b
14a
14b
15a
15b
16a
16b
18a
18b
21
211
212
213
22
23

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007078268 A
- US 20050103045 A